# EUROPEAN PATENT APPLICATION

(11) **EP 2 770 673 A1**
(43) Date of publication of application: **27.08.2014**
(21) Application number: 13198651.5
(22) Date of filing: 19.12.2013
(51) Int. Cl.: H04L 12/28

(54) **Wireless network audio system having auto-pairing function and auto-pairing method using the same**

(30) Priority: 20.02.2013 KR 20130018113
(71) Applicant: Samsung Electronics Co., Ltd, Gyeonggi-do 443-742 (KR)
(72) Inventor: Kim, Kwang-soo, Seoul (KR); Kang, Yong-jin, Gyeonggi-do (KR); Han, Woo-jin, Gyeonggi-do (KR); Yang, Sun-ho, Seoul (KR)
(74) Representative: Taor, Simon Edward William

(57) **Abstract**

A system and method of auto-pairing in a wireless network audio system is provided. The auto-pairing method including: entering, by an audio source device, an auto-pairing mode in response to power being supplied; retrieving, by the audio source device, a peripheral wireless speaker; and providing, by the audio source device, a home identifier (ID) for pairing with the wireless speaker in response to the audio source device retrieving the wireless speaker.

## Description

Apparatuses and methods consistent with the exemplary embodiments relate to a wireless network audio system, more particularly to a wireless network audio system capable of conducting auto-pairing upon supplying of power, and an auto-pairing method using the same.

In the related art, wireless network-based audio pairing methods generally employ Bluetooth, while audio pairing methods adopting Wi-Fi or non-standard radio technologies use a Wi-Fi Protected Setup (WPS) pairing button or involve users manually setting up relevant devices.

However, such methods require users to manually manipulate equipment, causing inconvenience to users. Moreover, if users are unfamiliar with a pairing method, it may be difficult for the users to pair devices.

One or more exemplary embodiments provide a wireless network audio system capable of conducting auto-pairing to provide convenience to users who are unfamiliar with pairing of a wireless network audio system, and an auto-pairing method using the same.

One or more exemplary embodiments also provide a wireless network audio system that does not require a user input pair a wireless network-based speaker and a main body, and an auto-pairing method using the same.

One or more exemplary embodiments also provide a wireless network audio system capable of conducting auto-pairing upon supplying of power, and an auto-pairing method using the same.

According to an aspect of an exemplary embodiment, there is provided an auto-pairing method of a wireless network audio system, the auto-pairing method including: entering, by an audio source device, an auto-pairing mode in response to power being supplied; retrieving, by the audio source device, a peripheral wireless speaker; and providing, by the audio source device, a home identifier (ID) for pairing with the wireless speaker.

The audio source device may retrieve the wireless speaker through an exchange of media access control (MAC) addresses.

According to an aspect of another exemplary embodiment, there is provideda method of auto-pairing a wireless network audio system, the auto-pairing method including: entering, by a wireless speaker having a wireless network function, an auto-pairing mode in response to power being supplied; retrieving, by the wireless speaker, a peripheral audio source device; outputting, by the wireless speaker, an audio signal in an audio frequency band; and providing, by the audio source device which receives the audio signal through a built-in microphone, a home identifier (ID) for pairing with the wireless speaker.

The audio source device may include a television (TV).

The wireless speaker may restrict pairing with other audio source devices with the exception of the paired audio source device.

According to an aspect of another exemplary embodiment, there is provided an auto-pairing method of a wireless network audio system, the auto-pairing method including: entering, by a wireless speaker having a wireless network function, an auto-pairing mode in response to power being supplied; retrieving, by the wireless speaker, a peripheral wireless network hub; outputting, by the wireless speaker, an audio signal in an audio frequency band; and providing, by the wireless network hub, a home identifier (ID) for pairing with the wireless speaker.

The wireless network hub may conduct multi-channel audio transmission with a plurality of wireless speakers provided with the same home ID.

According to an aspect of another exemplary embodiment, there is provided a wireless network audio system having an auto-pairing function including: a wireless speaker configured to enter an auto-pairing mode when power is supplied and configured to output an audio signal in an audio frequency band; and an audio source device configured to receive the audio signal through a built-in microphone to in order to recognize a pairing request signal and to provide a home identifier (ID) for pairing with the wireless speaker.

According to an aspect of another exemplary embodiment, there is provided a wireless network audio system having an auto-pairing function including: an audio source device; a wireless speaker configured to enter an auto-pairing mode in response to power being supplied and to output an audio signal in an audio frequency band; and a network hub configured to be connected to the audio source device through a wireless network access point, to receive the audio signal through a built-in microphone in order to recognize a pairing request signal, and to provide a home identifier (ID) for pairing with the wireless speaker.

Embodiments of the invention provide an auto-pairing method of a wireless network audio system, the auto-pairing method comprising: entering, by an audio source device, an auto-pairing mode in response to power being supplied to the audio source device; finding, by the audio source device, a wireless speaker; and providing, by the audio source device, a home identifier (ID) for pairing to the found wireless speaker.

Embodiments of the invention provide an auto-pairing method of a wireless network audio system, the auto-pairing method comprising: entering, by an audio source device, an auto-pairing mode in response to power being supplied to the audio source device; searching, by the audio source device, for a wireless speaker; and providing, by the audio source device, a home identifier (ID) for pairing to a found wireless speaker.

Embodiments of the invention provide an auto-pairing method of a wireless network audio system, the auto-pairing method comprising: entering, by a wireless speaker having a wireless network function, an auto-pairing mode in response to power being supplied to the wireless speaker; finding, by the wireless speaker, an audio source device; outputting, by the wireless speaker, an audio signal in an audio frequency band in response to the finding of the audio source device; and providing, by the audio source device, a home identifier (ID) for pairing with the wireless speaker in response to the audio source device receiving the audio signal through a built-in microphone.

Embodiments of the invention provide an auto-pairing method of a wireless network audio system, the auto-pairing method comprising: entering, by a wireless speaker having a wireless network function, an auto-pairing mode in response to power being supplied to the wireless speaker; finding, by the wireless speaker, a wireless network hub; outputting, by the wireless speaker, an audio signal in an audio frequency band in response to the finding of the wireless network hub; and providing, by the wireless network hub, a home identifier (ID) for pairing to the wireless speaker in response to the wireless network hub receiving the audio signal through a built-in microphone.

Embodiments of the invention provide a wireless network audio system having an auto-pairing function, the wireless network audio system comprising: a wireless speaker configured to enter an auto-pairing mode in response to power being supplied to the wireless speaker, and to output an audio signal in an audio frequency band; and an audio source device configured to receive the audio signal through a built-in microphone in order to recognize a pairing request signal, and to provide a home identifier (ID) for pairing with the wireless speaker.

Embodiments of the invention provide a wireless network audio system having an auto-pairing function, the wireless network audio system comprising: an audio source device; a wireless speaker configured to enter an auto-pairing mode in response to power being supplied to the wireless speaker, and to output an audio signal in an audio frequency band; and a network hub configured to be connected to the audio source device through a wireless network access point, to receive the audio signal through a built-in microphone in order to recognize a pairing request signal, and to provide a home identifier (ID) for pairing with the wireless speaker.

Embodiments of the invention provide an auto-pairing method of an audio source device of a wireless network audio system, the auto-pairing method comprising: entering an auto-pairing mode in response to power being supplied; searching for a wireless speaker; and providing a home identifier (ID) for pairing with the wireless speaker.

Embodiments of the invention provide an auto-pairing method of a wireless speaker of a wireless network audio system, the auto-pairing method comprising: entering an auto-pairing mode when power is supplied; retrieving information on an audio source device; outputting an audio signal in an audio frequency band; and receiving, from the audio source device, a home identifier (ID) for pairing with the audio source device in response to the audio source device receiving the audio signal.

The above and/or other aspects will become apparent and more readily appreciated from the following description of the exemplary embodiments, taken in conjunction with the accompanying drawings, in which:
FIG. 1 illustrates a configuration of an auto-pairing system according to a first exemplary embodiment.
FIG. 2 illustrates a configuration of an auto-pairing system according to a second exemplary embodiment.
FIG. 3 illustrates a configuration of an auto-pairing system according to a third exemplary embodiment.
FIG. 4 illustrates a configuration of an auto-pairing system according to a fourth exemplary embodiment.
FIG. 5 illustrates an auto-pairing method using a wireless network for an audio system according to an exemplary embodiment.
FIG. 6 illustrates an auto-pairing method using a wireless network for an audio system according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

Hereinafter, a wireless network audio system and a method of auto-pairing using the same, according to exemplary embodiments, will be described with reference to the accompanying drawings.

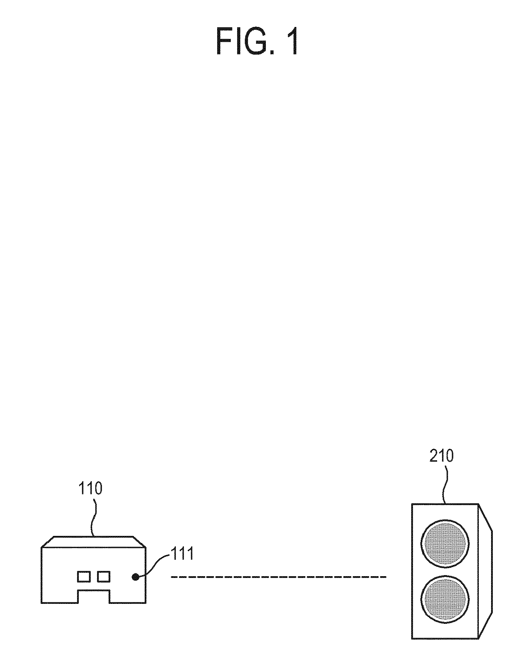

FIG. 1 illustrates a configuration of an auto-pairing system according to a first exemplary embodiment. FIG. 1 shows a speaker 210 having a wireless network function outputs an audio signal with a pattern to a hub 110 in an auto-pairing mode according to an exemplary embodiment. Here, the audio signal output from the speaker 210 has a frequency band ranging from about 16 Hz to about 24 kHz. The audio signal is transmitted to a microphone 111 of the hub 110. The speaker 210 transmits data using the audio signal. The hub 110 analyzes the audio signal to conduct auto-pairing.

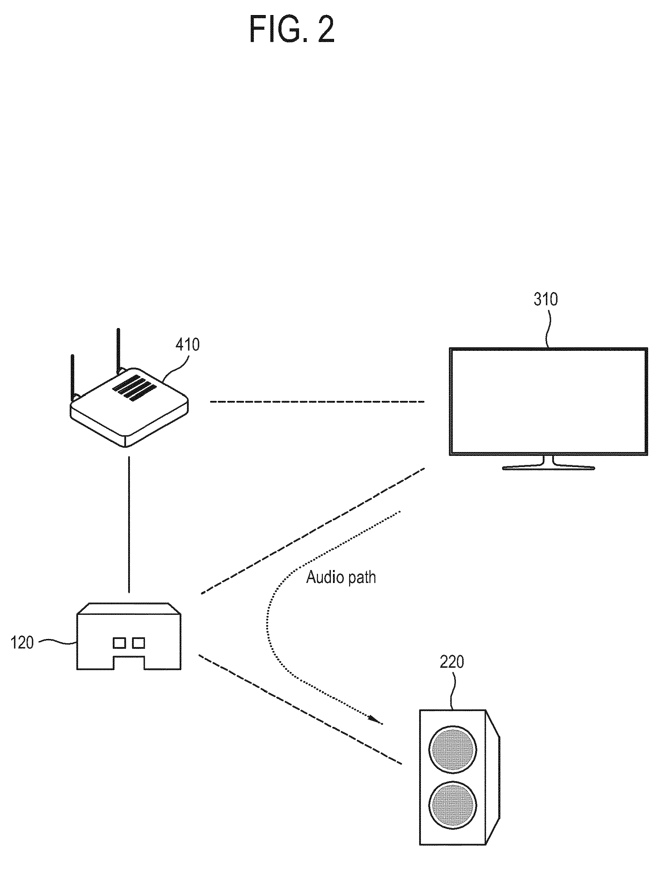

FIG. 2 illustrates a configuration of an auto-pairing system according to a second exemplary embodiment. FIG. 2 shows connection of a display device, e.g., a television (TV), 310 and a speaker 220 when a hub 120 is installed and the TV 310 is connected to the same network. The TV 310 is automatically paired with the hub 120 via an access point (AP) 410 and automatically paired with the speaker 220 connected to the hub 120.

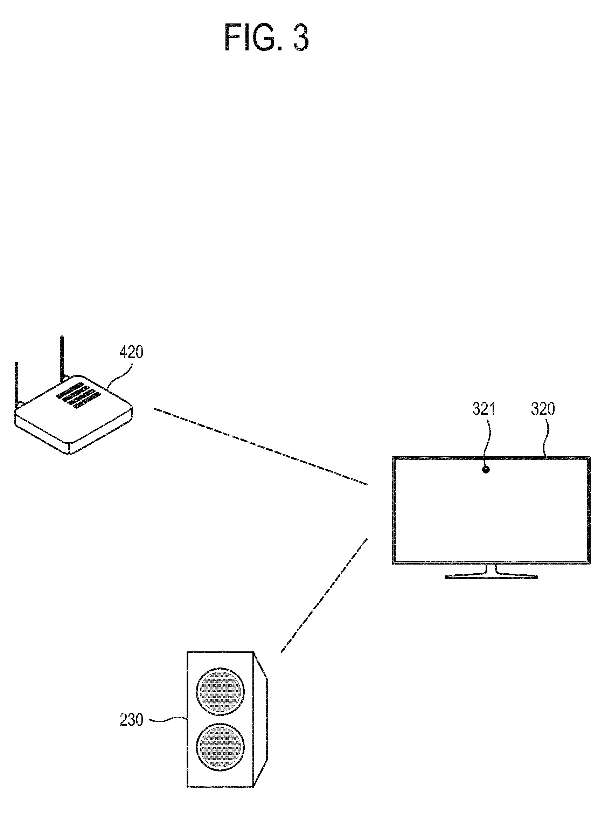

FIG 3. illustrates a configuration of an auto-pairing system according to a third exemplary embodiment. FIG. 3 shows connection of a TV 320 to a speaker 230 when only the speaker 230 is present without a hub. When power is supplied to the speaker 230 near the TV 320, the speaker 230 outputs an audio signal. The audio signal is received by a microphone 321 provided in the TV 320. The TV 320 generates a home identifier (ID) for a wireless speaker and transmits the home ID to an AP 420 using the received audio signal. The AP 420 transmits the home ID to the speaker 230 through a wireless network. Accordingly, pairing the TV 320 and the speaker 230 is completed.

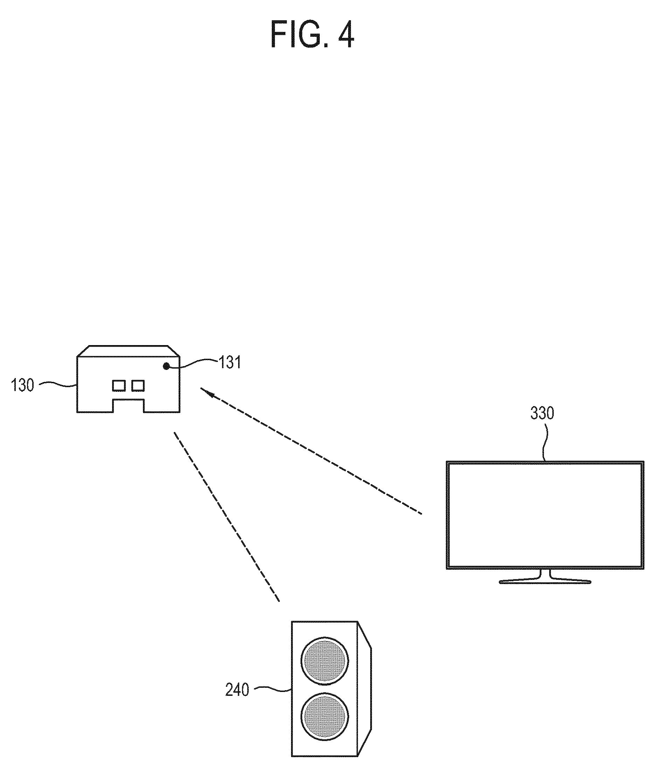

FIG. 4 illustrates a configuration of an auto-pairing system according to a fourth exemplary embodiment. FIG. 4 shows a configuration for auto-pairing a TV 330 and a speaker 240 without an AP. A menu of the TV 330 is imported to conduct a speaker addition function. As illustrated above in FIG. 1, the speaker 240 paired with the hub 130 one to one is paired with the TV 330.

An auto-pairing method of a wireless network audio system may be implemented in different ways, depending on the configurations of the wireless network audio systems, according to the foregoing embodiments.

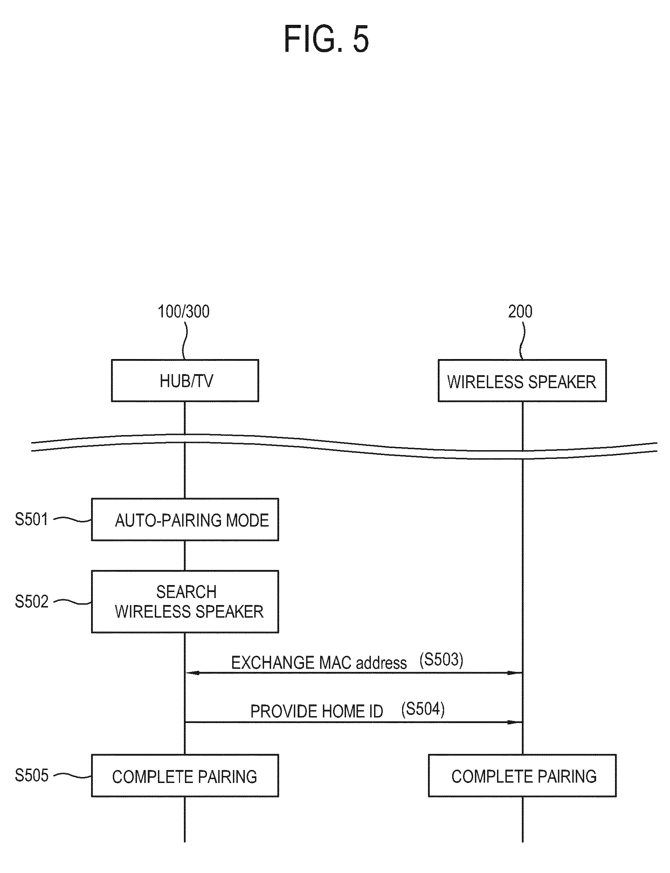

A first pairing process, in which an initial operation of auto-pairing is performed by an audio source device, is carried out as illustrated in FIG. 5.

In response to power being supplied, the audio source device, for example, a hub 100 or a TV 300, enters the auto-pairing mode (S501).

The hub 100 or the TV 300 retrieves a speaker 200 in the same wireless network by a peripheral retrieval method. For example, the hub 100 or the TV 300 may search for the speaker 200. In response to a failure to retrieve (or find) a peripheral device, the hub 100 or the TV 300 informs a user of information relating to the failure of retrieval. The information may be provided through an audio or video signal (S502).

The audio source device having retrieved the wireless speaker exchanges physical addresses, i.e., media access control (MAC) addresses, with the retrieved wireless speaker. That is, the audio source device transmits its own MAC address to the wireless speaker, and the wireless speaker transmits its own MAC address to the audio source device (S503).

When exchange of the MAC addresses is completed, the audio source device transmits a home ID for pairing to the wireless speaker (S504).

In this manner, the audio source device provides the home ID for pairing to the wireless speaker in the same wireless network, thereby completing pairing of the audio source device with the wireless speaker (S505).

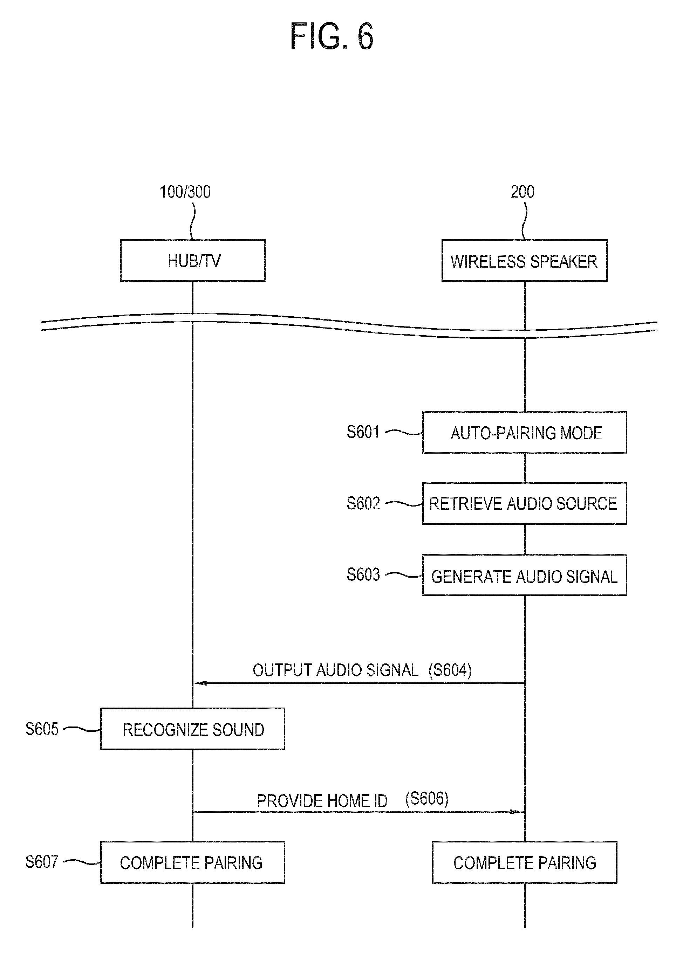

An auto-pairing process, in which an initial operation of auto-pairing is performed by a wireless speaker, is carried out as illustrated in FIG. 6.

In response to power being supplied to a wireless speaker 200 having a wireless network function, the wireless speaker 200 enters the auto-pairing mode (S601).

The wireless speaker 200 retrieves an audio source device within the same wireless network. The audio source device may be a hub 100 or a TV 300 (S602).

The wireless speaker 200, having found the audio source device, generates an audio signal in an audio frequency band. Here, the audio frequency band ranges from 16 Hz to 24 kHz. In response to failing to retrieve the audio source device, the wireless speaker 200 informs a user of information relating to the failure of pairing. The audio signal includes pairing information (S603).

The wireless speaker 200, which completes generation of the audio signal, outputs the audio signal (S604).

The audio source device receiving the audio signal through a built-in microphone, i.e., the hub 100 or the TV 300, recognizes a sound and extracts the pairing information provided through the audio signal (S605).

The audio source device, i.e., the hub 100 or the TV 300, provides a home ID for pairing with the wireless speaker 200 using the extracted pairing information. The home ID may be provided using an AP or a B-hub 100 depending on the configurations of the above described systems (S606).

The wireless speaker 200 provided with the home ID is automatically paired with the hub 100 or the TV 300 (S607).

In response to being connected to a plurality of wireless speakers, the hub 100 may conduct multi-channel audio transmission with wireless speakers provided with the same home ID. A different home ID is set up for each hub 100. Signal interference and security settings may be established for pairing between devices in the same wireless network through the hub 100. The wireless speaker 200 may not be paired with other audio source devices with the exception of the paired audio source device.

In the foregoing process, in response to a failure to retrieve the hub 100, the wireless speaker 200 is powered off with a "pairing failed" message being provided. In this case, when power is again supplied to the wireless speaker 200, the wireless speaker 200 enters back into the auto-pairing mode and conducts the foregoing operations.

As described above, a wireless network audio system and an auto-pairing method using the same according to exemplary embodiments have the following effects.

The wireless network audio system and the auto-pairing method conduct auto-pairing upon supplying of power to a speaker, and thus do not involve user manipulation.

In response to the wireless network audio system being changed with respect to installation, inconvenience in pairing may be avoided.

Although a few exemplary embodiments have been shown and described, it will be appreciated by those skilled in the art that changes may be made in these exemplary embodiments without departing from the principles of the inventive concept, the scope of which is defined in the appended claims and their equivalents.

## Claims

1. An auto-pairing method of a wireless network audio system, the auto-pairing method comprising:
entering, by an audio source device, an auto-pairing mode in response to power being supplied to the audio source device;
retrieving, by the audio source device, a wireless speaker; and
providing, by the audio source device, a home identifier (ID) for pairing to the retrieved wireless speaker.

2. The auto-pairing method of claim 1, wherein the retrieving comprises retrieving the wireless speaker through an exchange of media access control (MAC) addresses.

3. The auto-pairing method of claim 1 or 2, wherein the audio source device comprises a television.

4. An auto-pairing method of a wireless network audio system, the auto-pairing method comprising:
entering, by a wireless speaker having a wireless network function, an auto-pairing mode in response to power being supplied to the wireless speaker;
retrieving, by the wireless speaker, an audio source device;
outputting, by the wireless speaker, an audio signal in an audio frequency band in response to the retrieving the audio source device; and
providing, by the audio source device, a home identifier (ID) for pairing with the wireless speaker in response to the audio source device receiving the audio signal through a built-in microphone.

5. The auto-pairing method of claim 4, wherein the wireless speaker restricts pairing with other audio source devices except for the paired audio source device.

6. An auto-pairing method of a wireless network audio system, the auto-pairing method comprising:
entering, by a wireless speaker having a wireless network function, an auto-pairing mode in response to power being supplied to the wireless speaker;
retrieving, by the wireless speaker, information on a wireless network hub;
outputting, by the wireless speaker, an audio signal in an audio frequency band in response to the retrieving the wireless network hub; and
providing, by the wireless network hub, a home identifier (ID) for pairing to the wireless speaker in response to the wireless network hub receiving the audio signal through a built-in microphone.

7. The auto-pairing method of claim 6, wherein the wireless network hub conducts multi-channel audio transmission with a plurality of wireless speakers provided with the same home ID.

8. A wireless network audio system having an auto-pairing function, the wireless network audio system comprising:
a wireless speaker configured to enter an auto-pairing mode in response to power being supplied to the wireless speaker, and to output an audio signal in an audio frequency band; and
an audio source device configured to receive the audio signal through a built-in microphone in order to recognize a pairing request signal, and to provide a home identifier (ID) for pairing with the wireless speaker.

9. A wireless network audio system having an auto-pairing function, the wireless network audio system comprising:
an audio source device;
a wireless speaker configured to enter an auto-pairing mode in response to power being supplied to the wireless speaker, and to output an audio signal in an audio frequency band; and
a network hub configured to be connected to the audio source device through a wireless network access point, to receive the audio signal through a built-in microphone in order to recognize a pairing request signal, and to provide a home identifier (ID) for pairing with the wireless speaker.

10. The wireless network audio system of claim 9, wherein the audio source device comprises a television.

11. An auto-pairing method of an audio source device of a wireless network audio system, the auto-pairing method comprising:
entering an auto-pairing mode in response to power being supplied;
searching for a wireless speaker; and
providing a home identifier (ID) for pairing with the wireless speaker.

12. The auto-pairing method of claim 11, further comprising exchanging physical addresses with the wireless speaker.

13. An auto-pairing method of a wireless speaker of a wireless network audio system, the auto-pairing method comprising:
entering an auto-pairing mode when power is supplied;
retrieving an audio source device;
outputting an audio signal in an audio frequency band; and
receiving, from the audio source device, a home identifier (ID) for pairing with the audio source device in response to the audio source device receiving the audio signal.

14. The auto-pairing method of claim 13, wherein the audio source device receives the audio signal through a built in microphone.
